# EUROPEAN PATENT SPECIFICATION

(11) **EP 2 854 359 B1**
(45) Date of publication and mention of the grant of the patent: **15.04.2020**
(21) Application number: 13788316.1
(22) Date of filing: 27.06.2013
(51) Int. Cl.: H04L 29/06, H04W 28/06

(54) **COMPRESSION AND DECOMPRESSION METHODS OF ETHERNET HEADER AND CORRESPONDING DEVICES**
VERFAHREN ZUM KOMPRIMIEREN UND DEKOMPRIMIEREN VON ETHERNET-HEADERN UND ENTSPRECHENDE VORRICHTUNGEN
PROCÉDÉS DE COMPRESSION ET DE DÉCOMPRESSION D'EN-TÊTE ETHERNET ET DISPOSITIFS CORRESPONDANTS

(30) Priority: 19.11.2012 CN 201210468415
(43) Date of publication of application: 01.04.2015
(73) Proprietor: ZTE Corporation, Shenzhen, Guangdong 518057 (CN)
(72) Inventor: YAO, Wenda, Shenzhen Guangdong 518057 (CN); JIANG, Weiwei, Shenzhen Guangdong 518057 (CN); TENG, Da, Shenzhen Guangdong 518057 (CN)
(74) Representative: V.O.
(86) International application number: PCT/CN2013/078211
(87) International publication number: WO 2013/167013

(56) References cited:
- EP-A1- 1 603 305
- EP-A2- 1 513 305
- WO-A1-2009/004631
- CN-A- 101 072 188
- CN-A- 101 400 083
- CN-A- 102 025 737
- GB-A- 2 386 805

## Description

### TECHNICAL FIELD

The disclosure relates to compression/decompression techniques, and in particular to a method and device for compressing/decompressing an Ethernet header in a microwave transmission system.

### BACKGROUND

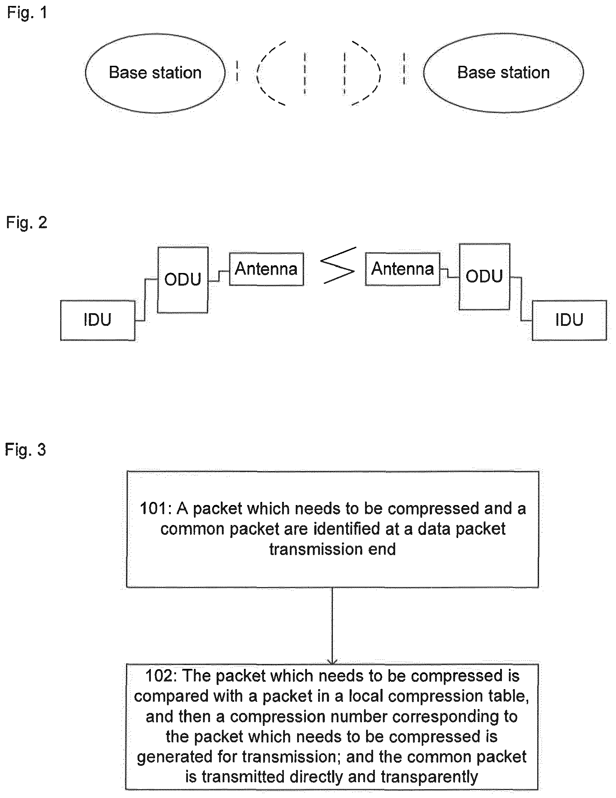

As one of main means for modern communication transmission, microwave communications are capable of providing robust service transmission capability. In addition, due to their advantages such as great transmission capacity, quality stability over a long-distance transmission, small investment, low cost, short construction cycle, ease of maintenance and the like, microwave communications are widely used in bearer networks for 2G/3G mobile networks and have become a key choice for mobile operators to transmit voice and data services. Due to their point-to-point transmission characteristics, microwave communications are also used as a backbone for transmission between base stations, between a base station and a base station controller and between a base station and an access gateway. An existing application scenario of microwave communications is shown in Fig. 1.

Common microwave communication nodes are generally used in pairs, and each site generally includes a modulation/demodulation unit and a transmission unit. As shown in Fig. 2, the modulation/demodulation unit is generally placed indoors and thus referred to as an In Door Unit (IDU); the radio frequency (RF) transmission unit is generally placed on a tower together with an antenna and thus referred to as Out Door Unit (ODU). With the development of mobile communications, diversified services are increasingly transmitted in a network. Regardless of a Time Division Multiplex (TDM) service, an E1 service or a conventional Ethernet data service, each of them will be framed in an IDU and then transmitted out through an air interface. With the development of techniques, there is an increasing need for bandwidth of the air interface, and it becomes increasingly important to save limited bandwidth of the air interface.

With the deep evolution of IP, more and more services will be packaged into an Ethernet packet for transmission. The overhead of an Ethernet header is at least 38 bytes. Such an overhead is relatively great when we only care about services, and therefore it becomes increasingly important to compress a header of Ethernet data packet so as to improve utilization of over-the-air bandwidths and save limited over-the-air bandwidth resources. Most of existing compression techniques are aimed at the field of wired transmission, i.e., after a data packet is compressed at a data packet transmission end, a compressed data packet is transmitted through a wired technique to a data packet reception end, and then after decompression at the data packet reception end, the original data packet is restored.

Existing compression techniques are introduced as follows.

Currently, commonly-used compression algorithms include Van Jacobson Header Compression (VJHC) solution, IP Header Compression (IPHC) solution, Compression RTP (CRTP) solution and Robust Header Compression (ROHC) solution.

Problems with above existing compression techniques are as follows: the earliest proposed VIHC solution and its complementary solution, i.e., the IPHC can only support a UDP similar to a multicast, while the CRTP solution is only proposed for the RTP, furthermore all these solutions are adaptive to an wired environment and thus can not ensure the correctness of transmission in wireless field due to their weak coding. ROHC, though capable of performing robust compression and decompression on wireless links, due to its complicated synchronization and compression mechanism, it is complex for implementation, and the high complexity for implementation will result in a long transmission delay, and therefore ROHC is not perfect for use in wireless transmission.

To sum up, in order to improve utilization of over-the-air bandwidths, microwave communications, as a popular wireless transmission technique currently, is to deal with problems existing in the compression of Ethernet data, while, so far ,there are no simple and effective solutions.

It is noted that publication EP 1 513 305 A2 discloses a method for transferring data packet from a compressor to a decompressor, wherein a new abbreviated time-stamp TSabb is compared with a stored value TSmem1. If the new abbreviated time-stamp TSabb is greater than the stored value TSmem1 and the difference is not too big, the time-stamp can be reconstructed.

It is further noted that publication GB 2 386 805 A discloses a method for compression of a signaling portion of a communications packet, wherein a difference between a first and a second subsequent signaling portion/header is determined. This difference is used to produce a bit mask which is transmitted with the data. If the bit mask for the next packet is the same, then an indication that this is the case is transmitted with the data.

Document WO 2009/004631 A1 discloses Ethernet header compression and decompression using pointers associated with headers to be compressed.

### SUMMARY

In view of the above, embodiments of the disclosure are intended to provide a method and device for compressing/decompressing an Ethernet header, which are simple and effective solutions to improve utilization of over-the-air bandwidths based on the compression of Ethernet data, thus decreasing implementation complexity as well as delay in packet transmission.

The invention is directed to a method for compressing an Ethernet header according to claim 1, to a method for decompressing an Ethernet header according to claim 5, to a device for compressing an Ethernet header according to claim 8 and to a device for decompressing an Ethernet header according to claim 10. Preferred embodiments are set out in the dependent claims.

In embodiments of the disclosure, since a packet which needs to be compressed is transmitted after a compression number corresponding to the packet which needs to be compressed is generated by the comparison of the packet which needs to be compressed with a packet in a local compression table, what transmitted is the compression number related to a difference between packets instead of an entire packet. Therefore bandwidths are saved, the compression and decompression methods are simple and effective solutions to improve utilization of over-the-air bandwidths based on the compression of Ethernet data, thus decreasing implementation complexity as well as delay in packet transmission.

### BRIEF DESCRIPTION OF THE DRAWINGS

Fig. 1 is a schematic diagram showing an existing application scenario of microwave communications;
Fig. 2 is a schematic diagram showing an existing ODU and IDU scenario;
Fig. 3 is a schematic flow chart of the compression method according to embodiments of the disclosure; and
Fig. 4 is a schematic flow chart of the decompression method according to embodiments of the disclosure.

### DETAILED DESCRIPTION

According to various embodiments of the disclosure, when compression is performed, a packet which needs to be compressed is compared with a packet in a local compression table, the packet which needs to be compressed is transmitted after a compression number corresponding to the packetd which needs to be compressed is generated and a common packet is transmitted directly and transparently. When decompression is performed, a packet to be decompressed is extracted from a local decompression table according to a compression number corresponding to the packet to be decompressed, the packet to be decompressed is compared with a packet extracted from the local decompression table to restore original packet content, and the common packet is transmitted directly and transparently.

First, as to compression, embodiments of the disclosure mainly handle a process for compressing a header through a compression number, and the process is divided into sub-processes such as paging, comparison, update and compression. The compression method according to embodiments of the disclosure has features such as simple implementation, short time delay and small amount of calculation. The compress process may mainly include the following.
1. Paging: after a plurality of new packets enter into a compression unit of a data packet transmission end, the compression unit firstly identifies a set of packets which needs to be compressed and allocates pages for the set of packets which needs to be compressed, and the number of pages is at least 1 page. When compression is performed, each page can be allocated with one compression number or several pages may share one compression number.
2. Generation of compression number: the packet which needs to be compressed is compared with a packet in a local compression table, and a difference between each set of packets which needs to be compressed and the local compressed packet is calculated so as to generate a compression number of the set of packets. The compression number includes at least a compression identifier (ID) and a value of difference, and also includes information about paging of the set of packets, other difference information of the set of packets and the like. The value of difference is related to the granularity of the comparison. Comparison may be performed by using a same granularity, or in a mode combining a great granularity and a small granularity.
3. ID update: according to a result of the difference obtained from the comparison, the result of the difference being a value of difference, when the value of difference is larger than an upper limiting value N of the difference, a new ID is generated for the set of packets, and the corresponding packets are in a updated state; when the value of difference is smaller than N, the corresponding packets are in a compressed state.
   When it is in the compressed state, when the header of the packet which needs to be compressed is exactly the same as the header of the packet in the local compression table, it is selected to transmit only the compression number because there is no need to re-transmit the packet which needs to be compressed, therefore saving the bandwidth to the greatest extent and improving greatly utilization of an air interface. If the header of the packet which needs to be compressed is not exactly the same as the header of the packet in the local compression table and a difference therebetween is smaller than the N, it is selected to transmit the compression number and the information content of the difference between the packet which needs to be compressed and the packet in the local compression table after the comparison.
4. Framing: each set of compressed packets are framed, the compression number is at the front and different subsections in each set are added into the packets and transmitted, and then the local compression table is updated.

Second, as to decompression, it includes the following.
1. Frame parsing: at a data packet reception end, a decompression unit parses whether a received packet is a common packet or a packet to be decompressed, as to a common packet, the decompression unit transmits it transparently, while as to a packet to be decompressed, it is extracted and decompressed by set.
2. Decompression: according to the compression number of the set and a packet to be decompressed carried with the corresponding compression number, content of a packet in the local decompression table corresponding to the compression number is extracted and then compared with the packet to be decompressed carried by the corresponding compression number so as to restore original packet content.
3. Update: the restored original packet content is updated in the local decompression table so as to keep the local decompression table consistent with a local compression table at a data packet transmission end.

Further, in order to ensure the correctness of the compression and decompression and the robustness of the system over a long time period, a feedback mechanism and a periodical refreshing mechanism are designed, which are specifically described as follows.

As to the feedback mechanism, after the decompression, a decompression end will check packets, and when a check result of decompression of the packet is not consistent with a post-decompression checksum, proceed to a feedback process which includes:
a. packet generation: a feedback packet is generated in a form of feedback ID header + compression number, and transmitted to the data packet transmission end through a link.
b. feedback response: the feedback ID header is identified at the data packet transmission end, a corresponding compression number is parsed and a packet field in the local compression table corresponding to the compression number is emptied.

As to the periodical refreshing mechanism, in the case of a unidirectional link, since no links of the transmission end are received, it is necessary to trigger the periodical refreshing mechanism so as to ensure the correctness of the system operating over a long time period: emptying at intervals the compression table at the transmission end, re-performing compression adaptation, clearing a usage state of the compression number and updating synchronously by the decompression end the decompression table according to the state of the compression number.

A device for compressing an Ethernet header, located at a data packet transmission end, may include a compression unit and a transmission unit, wherein the compression unit is configured to identify a packet which needs to be compressed and a common packet, compare the packet which needs to be compressed with a packet in a local compression table and generate a compression number corresponding to the packet which needs to be compressed. The transmission unit is configured to: for the packet which needs to be compressed, transmit the generated compression number corresponding to the packet which needs to be compressed; and for the common packet, transmit directly and transparently the common packet.

In an embodiment, the compression unit may be further configured to compress the header after acquring a difference between the packet which needs to be compressed and the packet in the local compression table by comparison. The transmission unit is further configured to, when the comparison indicates that the difference between the packet which needs to be compressed and the packet in the local compression table is smaller than an upper limiting difference value N, transmit only the compression number or transmit both the compression number and information content of the difference between the packet which needs to be compressed and the packet in the local compression table after the comparison.

In an embodiment, the device may further include a feedback response unit configured to receive a feedback packet from a data packet reception end, identify a feedback identifier at the data packet transmission end, parse a compression number of the feedback response, and empty a packet field in the local compression table corresponding to the compression number.

A device for decompressing an Ethernet header, located at a data packet reception end, comprising a decompression unit and a transmission unit, wherein the decompression unit is configured to identify a packet to be decompressed and a common packet, extract a packet from a local decompression table according to a compression number corresponding to the packet to be decompressed, compare the packet to be decompressed with the packet extracted from the local decompression table to restore original packet content. The transmission unit is configured to: for the packet to be decompressed, transmit the original packet content which is restored by comparison; and for the common packet, transmit directly and transparently the common packet.

In an embodiment, the device may further include an update unit configured to update restored original packet content to the local decompression table so as to keep the local decompression table consistent with a local compression table at a data packet transmission end.

In an embodiment, the device may further include a feedback unit configured to perform a packet check at the data packet reception end, and when a check after the decompression, when a result of the packet check is not consistent with a post-decompression checksum, generate a feedback packet according to a feedback identifier and an order of the compression number and transmit the feedback packet to the data packet transmission end.

To sum up, characteristics of wireless transmission are taken into consideration in the compression solution and corresponding decompression solution provided by embodiments of the disclosure, which have a great robustness and real-time performance and the learning mechanism based on a compression number and difference information is simple and easy to implement.

Implementation of technical solutions will be further elaborated below with reference to the drawings.

Fig. 3 is a schematic flow chart of the compression method according to embodiments of the disclosure, and the compression method includes the following steps.

Step 101, a packet which needs to be compressed and a common packet are identified at a data packet transmission end.

Step 102, for the packet which needs to be compressed, the packet which needs to be compressed is compared with a packet in a local compression table, a compression number corresponding to the packet which needs to be compressed is generated for transmission and the common packet is transmitted directly and transparently.

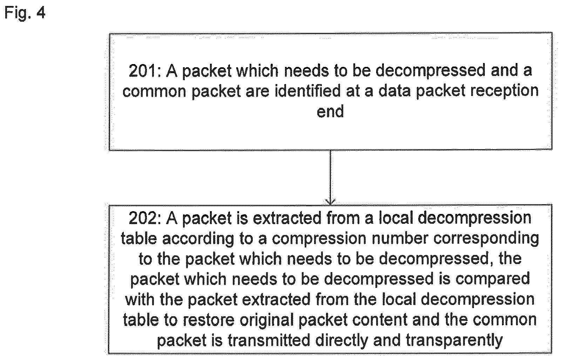

Fig. 4 is a schematic flow chart of the decompression method according to embodiments of the disclosure, and the decompression method includes the following steps.

Step 201, a packet to be decompressed and a common packet are identified at a data packet reception end.

Step 202, a packet is extracted from a local decompression table according to a compression number corresponding to the packet to be decompressed, and the packet to be decompressed is compared with the packet extracted from the local decompression table to restore original packet content; and the common packet is transmitted directly and transparently.

Depending on different numbers of IDs and values of N, the solution according to embodiments of the disclosure may be applied to a layer 2 MAC compression or a layer 3 compression, but not limited to the application scope specified herein.

### Application example 1, layer 2 MAC compression

When N is set to minimum, i.e., 0 byte, the application example is similar to a comparison of equivalence. As long as there is 1 byte difference, an update operation may be generated and a new ID is allocated; only when packets are exactly the same, it is considered that the compression hits, at that time since the ID is updated frequently, it is desired to open up a relatively large ID space (127 or 256 and the like), it is recommended to use this mode since the MAC address is relatively fixed in an Ethernet packet and there are a large number of them.

Application example 2 is one complete method application example of embodiments of the disclosure and relates to compression, decompression and transmission of an Ethernet header during microwave communications. The method embodiment compresses an Ethernet header in a service so as to reduce the amount of data to be transmitted, thus saving over-the-air bandwidths. The method is divided into compression, decompression and feedback processes. The processes are elaborated respectively as follows.

As to the compression process, IP headers are grouped and a moving window operation is performed, i.e., layer 3 packets are grouped and compression is performed on each group.

Step S11, when a layer 3 packet enters into a compression portion, it is firstly packaged into a compression element, which is compared with data in a compression table.

In an embodiment, a comparison result may represent to what extent each compression element differs from corresponding packet data in the compression table. Specifically, in the application example, one compression identifier window is maintained. When a new IP packet comes, a header of the IP packet is compared with an IP header corresponding to the compression identifier in a window (i.e., in a local compression table) so as to obtain difference information. It should be noted that a compression identifier is generated by taking a minimum difference value from all calculation results within the window. If all results are the same, any one of them can be taken.

Step S12, in a compressed state, a compression number in the local compression table is extracted for transmission along with the packet data content corresponding to the difference between the headers of the packet which needs to be compressed and that in the local compression table. The aim of doing so is to ensure efficiency of the compression. If a header of the packet which needs to be compressed is exactly the same as a header of the packet in the local compression table, it is possible to transmit only a compression number corresponding to the header. The compression number includes difference information between packets.

To better understand the application example, the above compression process will be described below with reference to Table 1 and Table 2. Table 1 shows a format of a packet prior to the compression, i.e., a normal packet format, in Table 1, "Packet type" is used to indicate a type of an Ethernet packet, such as IPv4 or IPv6; Table 2 shows a format of a compressed packet, i.e., a data format of the header data after being grouped and compressed, in Table 2, grouped header data in use behaves as individual groups of header data after being grouped, the header data can be grouped into 2 groups, 3 groups, 4 groups and the like.

**Table 1**

| | | | | |
|---|---|---|---|---|
| ETH header | Packet type | Packet header | Other protocol header | Net load |

**Table 2**

| | | | | | |
|---|---|---|---|---|---|
| ETH header | Packet type | Compression Identifier | Comparison result | Other protocol header | Net load |

As to the decompression process, decompression is performed on each group.

Step S21, after receiving the layer 3 packet, it is determined whether a received packet is a packet to be decompressed, i.e., whether the received packet is a compressed packet obtained through above compression process, if the received packet is a non-compressed packet, it is transmitted transparently; otherwise, it is decompressed.

Step S22, data extracted from a local decompression table corresponding to the compression identifier is compared with packet data in the local decompression table so as to obtain decompressed packet data, and then the decompressed packet data is framed.

As to the feedback process, when a restored packet differs from self-contained check information, it is considered that the decompression has an error, when such a situation appears, a data reception end is desired to transmit a feedback packet to a data transmission end, and then a compression unit of the data transmission end empties data in a corresponding position in the local decompression table.

What described are merely preferable embodiments of the disclosure, and are not intended to limit the disclosure.

### INDUSTRIAL APPLICABILITY

In embodiments of the disclosure, a packet which needs to be compressed is compared with a packet in a local compression table and then a compression number corresponding to the packet which needs to be compressed is generated. In this way, what is transmitted is the compression number related to a difference between packets instead of the entire packet. Therefore bandwidths are saved by using embodiments of the disclosure. The compression and decompression methods are simple and effective solutions to improve utilization of over-the-air bandwidths based on the compression of Ethernet data, thus decreasing implementation complexity as well as delay in packet transmission.

## Claims

1. A method for compressing an Ethernet header, comprising: at a data packet transmission end,
identifying (101) a header which needs to be compressed and a common header;
for the identified header which needs to be compressed, comparing (102) the header which needs to be compressed with a header in a local compression table, and generating a compression number corresponding to the header which needs to be compressed for transmission; and
for the identified common header, transmitting (102) directly and transparently the common header;
wherein the comparing the header which needs to be compressed with a header in the local compression table, and generating a compression number corresponding to the header which needs to be compressed for transmission comprises:
when the comparison indicates that a difference amount value between the header which needs to be compressed and the header in the local compression table is smaller than an upper limiting difference value N, transmitting only the compression number or transmitting both the compression number and difference information content between the header which needs to be compressed and the header in the local compression table acquired through the comparison;
further comprising:
when the header which needs to be compressed is exactly the same as the header in the local compression table, transmitting only the compression number; and
when the header which needs to be compressed is not exactly the same as the header in the local compression table and the difference amount value is smaller than the upper limiting difference value N, transmitting the compression number and the difference information content between the header which needs to be compressed and the header in the local compression table acquired through the comparison.

2. The method according to claim 1, wherein the compression number comprises at least a compression identifier (ID) and a difference amount value between the header which needs to be compressed and the header in the local compression table.

3. The method according to claim 2, further comprising:
when the difference amount value is larger than the upper limiting difference value N, re-generating the ID, wherein a corresponding header is in an updated state;
when the difference amount value is smaller than the upper limiting difference value N, proceeding without re-generating the ID, wherein a corresponding header is in a compressed state.

4. The method according to any one of claims 1 to 3, further comprising making a feedback response to the transmission;
wherein the feedback response comprises: receiving a feedback packet from a data packet reception end, identifying a feedback identifier at the data packet transmission end, parsing a compression number of the feedback response, and emptying a header field in the local compression table corresponding to the compression number.

5. A method for decompressing an Ethernet header, comprising: at a data packet reception end,
Identifying (201) a header which needs to be decompressed and a common header, that are received from a data packet transmission end,
for the identified header which needs to be decompressed, extracting (201) a header from a local decompression table according to a compression number corresponding to the header to be decompressed, the header to be decompressed being a compressed header obtained through compressing a header which needs to be compressed at the data packet transmission end, and comparing the header to be decompressed with the header extracted from the local decompression table to restore original header content; and
for the identified common header, transmitting (201) directly and transparently the common header;
wherein the header to be decompressed comprises a compression number when the header which needs to be compressed is exactly the same as the header in the local compression table at the data packet transmission end; or
the header to be decompressed comprises a compression number and difference information content between the header which needs to be compressed and the header in the local compression table at the data packet transmission end when a difference amount value between the header which needs to be compressed and the header in the local compression table at the data packet transmission end is smaller than an upper limiting difference value N and the header which needs to be compressed is not exactly the same as the header in the local compression table.

6. The method according to claim 5, further comprising:
updating the restored original header content to the local decompression table, so as to keep the local decompression table consistent with the local compression table that is updated after transmitting a compressed header at the data packet transmission end.

7. The method according to claim 5 or claim 6, further comprising making a check feedback;
wherein the check feedback comprises: performing a header check at the data packet reception end after the decompression; when a result of the header check is not consistent with a post-decompression checksum, generating a feedback packet according to a feedback identifier and an order of the compression number with an order; and transmitting the feedback packet to the data packet transmission end.

8. A device for compressing an Ethernet header, located at a data packet transmission end, comprising a compression unit and a transmission unit, wherein
the compression unit is configured to identify a header which needs to be compressed and a common header, compare the header which needs to be compressed with a header in a local compression table and generate a compression number corresponding to the header which needs to be compressed; and
the transmission unit is configured to: for the header which needs to be compressed, transmit the generated compression number corresponding to the header which needs to be compressed; and for the common header, transmit directly and transparently the common header;
wherein the compression unit is further configured to compress the header after acquiring a difference amount value between the header which needs to be compressed and the header in the local compression table by the comparison; and
wherein the transmission unit is further configured to: when the comparison indicates that the difference amount value between the header which needs to be compressed and the header in the local compression table is smaller than an upper limiting difference value N, transmit only the compression number or transmit both the compression number and difference information content between the header which needs to be compressed and the header in the local compression table acquired through the comparison;
the transmission unit is further configured to:
when the header which needs to be compressed is exactly the same as the header in the local compression table, transmit only the compression number; and
when the header which needs to be compressed is not exactly the same as the header in the local compression table and the difference amount value is smaller than the upper limiting difference value N, transmit the compression number and the difference information content between the header which needs to be compressed and the header in the local compression table acquired through the comparison.

9. The device according to claim 8, further comprising: a feedback response unit, configured to receive a feedback packet from a data packet reception end, identify a feedback identifier at the data packet transmission end, parse a compression number of the feedback response, and empty a header field in the local compression table corresponding to the compression number.

10. A device for decompressing an Ethernet header, located at a data packet reception end, comprising a decompression unit and a transmission unit, wherein
the decompression unit is configured to identify a header which needs to be decompressed and a common header, that are received from a data packet transmission end, extract a header from a local decompression table according to a compression number corresponding to the header which needs to be decompressed, the header to be decompressed being a compressed header obtained through compressing a header which needs to be compressed at a data packet transmission end, compare the header which needs to be decompressed with the header extracted from the local decompression table to restore original header content.
the transmission unit is configured to: for the header which needs to be decompressed, transmit the original header content which is restored by the comparison; and for the common header, transmit directly and transparently the common header;
wherein the header to be decompressed comprises a compression number when the header which needs to be compressed is exactly the same as the header in the local compression table at the data packet transmission end; or
the header to be decompressed comprises a compression number and difference information content between the header which needs to be compressed and the header in the local compression table at the data packet transmission end when a difference amount value between the header which needs to be compressed and the header in the local compression table at the data packet transmission end is smaller than an upper limiting difference value N and the header which needs to be compressed is not exactly the same as the header in the local compression table.

11. The device according to claim 10, further comprising an update unit configured to update restored original header content to the local decompression table, so as to keep the local decompression table consistent with the local compression table that is updated before transmitting a compressed header at the data packet transmission end.

12. The device according to claim 10 or claim 11, further comprising:
a feedback unit, configured to perform a header check at the data packet reception end after the decompression, and when a result of the header check is not consistent with a post-decompression checksum, generate a feedback packet according to a feedback identifier and the compression number with an order, and transmit the feedback packet to the data packet transmission end.

## Patentansprüche

1. Verfahren zum Komprimieren eines Ethernet-Headers, umfassend: an einem Datenpaketübertragungsende,
Identifizieren (101) eines zu komprimierenden Headers und eines gemeinsamen Headers; Vergleichen (102) des zu komprimierenden Headers mit einem Header in einer lokalen Komprimierungstabelle und Erzeugen einer Komprimierungsnummer, die dem für die Übertragung zu komprimierenden Header entspricht, für den identifizierten zu komprimierenden Header; und
direktes und transparentes Übertragen (102) des gemeinsamen Headers, für den identifizierten gemeinsamen Header;
wobei das Vergleichen des zu komprimierenden Headers mit einem Header in der lokalen Komprimierungstabelle und das Erzeugen einer Komprimierungsnummer, die dem für die Übertragung zu komprimierenden Header entspricht, umfassen:
dass nur die Komprimierungsnummer oder sowohl die Komprimierungsnummer als auch der Differenzinformationsinhalt zwischen dem zu komprimierenden Header und dem Header in der durch den Vergleich erfassten lokalen Komprimierungstabelle übertragen wird, wenn der Vergleich anzeigt, dass ein Differenzbetragswert zwischen dem zu komprimierenden Header und dem Header in der lokalen Komprimierungstabelle kleiner als ein oberer Grenzdifferenzwert N ist;
wobei es weiterhin umfasst:
dass nur die Komprimierungsnummer übertragen wird, wenn der zu komprimierende Header genau dem Header in der lokalen Komprimierungstabelle entspricht; und
dass die Komprimierungsnummer und der Differenzinformationsinhalt zwischen dem zu komprimierenden Header und dem Header in der durch den Vergleich erfassten lokalen Komprimierungstabelle übertragen werden, wenn der zu komprimierende Header nicht genau dem Header in der lokalen Komprimierungstabelle entspricht und der Differenzbetragswert kleiner als der obere Grenzdifferenzwert N ist.

2. Verfahren nach Anspruch 1, wobei die Komprimierungsnummer mindestens ein Komprimierungskennzeichen (ID) und einen Differenzbetragswert zwischen dem zu komprimierenden Header und dem Header in der lokalen Komprimierungstabelle umfasst.

3. Verfahren nach Anspruch 2, wobei es weiterhin umfasst:
erneutes Erzeugen der ID, wenn der Differenzbetragswert größer als der obere Grenzdifferenzwert N ist, wobei sich ein entsprechender Header in einem aktualisierten Zustand befindet;
Fortsetzen, ohne die ID erneut zu erzeugen, wenn der Differenzbetragswert kleiner als der obere Grenzdifferenzwert N ist, wobei sich ein entsprechender Header in einem komprimierten Zustand befindet.

4. Verfahren nach einem der Ansprüche 1 bis 3, umfassend weiterhin Durchführen einer Rückkopplungsantwort auf die Übertragung;
wobei die Rückkopplungsantwort umfasst: Empfangen eines Rückkopplungspakets von einem Datenpaketempfangsende, Identifizieren eines Rückkopplungskennzeichens an dem Datenpaketübertragungsende, Analysieren einer Komprimierungsnummer der Rückkopplungsantwort und Entleeren eines der Komprimierungsnummer entsprechenden Headerfeldes in der lokalen Komprimierungstabelle.

5. Verfahren zum Dekomprimieren eines Ethernet-Headers, umfassend: an einem Datenpaketempfangsende,
Identifizieren (201) eines zu dekomprimierenden Headers und eines gemeinsamen Headers, die von einem Datenpaketübertragungsende empfangen werden;
Extrahieren (201) eines Headers aus einer lokalen Dekomprimierungstabelle gemäß einer Komprimierungsnummer, die dem zu dekomprimierenden Header entspricht, für den identifizierten zu dekomprimierenden Header, wobei der zu dekomprimierende Header ein komprimierter Header ist, der durch Komprimieren eines zu komprimierenden Headers an dem Datenpaketübertragungsende erhalten wird, und Vergleichen des zu dekomprimierenden Headers mit dem aus der lokalen Dekomprimierungstabelle extrahierten Header, um den ursprünglichen Headerinhalt wiederherzustellen; und
direktes und transparentes Übertragen (201) des gemeinsamen Headers, für den identifizierten gemeinsamen Header;
wobei der zu dekomprimierende Header eine Komprimierungsnummer umfasst, wenn der zu komprimierende Header genau dem Header in der lokalen Komprimierungstabelle an dem Datenpaketübertragungsende entspricht; oder
der zu dekomprimierende Header eine Komprimierungsnummer und einen Differenzinformationsinhalt zwischen dem zu komprimierenden Header und dem Header in der lokalen Komprimierungstabelle an dem Datenpaketübertragungsende umfasst, wenn ein Differenzbetragswert zwischen dem zu komprimierenden Header und dem Header in der lokalen Komprimierungstabelle an dem Datenpaketübertragungsende kleiner als ein oberer Grenzdifferenzwert N ist und der zu komprimierende Header nicht genau dem Header in der lokalen Komprimierungstabelle entspricht.

6. Verfahren nach Anspruch 5, wobei es weiterhin umfasst:
Aktualisieren des wiederhergestellten ursprünglichen Header-Inhalts in die lokale Dekomprimierungstabelle, um die lokale Dekomprimierungstabelle mit der lokalen Komprimierungstabelle identisch zu halten, die nach dem Übertragen eines komprimierten Headers an dem Datenpaketübertragungsende aktualisiert wird.

7. Verfahren nach Anspruch 5 oder 6, umfassend weiterhin Durchführen einer Überprüfungsrückkopplung;
wobei die Überprüfungsrückkopplung umfasst: Durchführen einer Headerüberprüfung an dem Datenpaketempfangsende nach dem Dekomprimieren; Generieren eines Rückkopplungspakets in Übereinstimmung mit einem Rückkopplungskennzeichen und einer Reihenfolge der Komprimierungsnummer mit einer Reihenfolge, wenn ein Ergebnis der Headerüberprüfung nicht mit einer Post-Dekompression Prüfsumme identisch ist; und Übertragen des Rückkopplungspakets an das Datenpaketübertragungsende.

8. Vorrichtung zum Komprimieren eines Ethernet-Headers, der sich an einem Datenpaketübertragungsende befindet, umfassend eine Komprimierungseinheit und eine Übertragungseinheit umfasst, wobei
die Komprimierungseinheit dazu konfiguriert ist, einen zu komprimierenden Header und einen gemeinsamen Header zu identifizieren, den zu komprimierenden Header mit einem Header in einer lokalen Komprimierungstabelle zu vergleichen und eine Komprimierungsnummer zu generieren, die dem zu komprimierenden Header entspricht;
die Übertragungseinheit dazu konfiguriert ist, für den zu komprimierenden Header die generierte Komprimierungsnummer zu übertragen, die dem zu komprimierenden Header entspricht; und für den gemeinsamen Header den gemeinsamen Header direkt und transparent zu übertragen;
wobei die Komprimierungseinheit weiterhin dazu konfiguriert ist, den Header nach dem Erfassen eines Differenzbetragswerts zwischen dem zu komprimierenden Header und dem Header in der lokalen Komprimierungstabelle durch den Vergleich zu komprimieren; und
wobei die Übertragungseinheit weiterhin dazu konfiguriert ist, nur die Komprimierungsnummer zu übertragen oder sowohl die Komprimierungsnummer als auch den Differenzinformationsinhalt zwischen dem zu komprimierenden Header und dem Header in der durch den Vergleich erfassten lokalen Komprimierungstabelle zu übertragen, wenn der Vergleich anzeigt, dass der Differenzbetragswert zwischen dem zu komprimierenden Header und dem Header in der lokalen Komprimierungstabelle kleiner als ein oberer Grenzdifferenzwert N ist;
und wobei die Übertragungseinheit weiterhin dazu konfiguriert ist:
nur die Komprimierungsnummer zu übertragen, wenn der zu komprimierende Header genau dem Header in der lokalen Komprimierungstabelle entspricht; und die Komprimierungsnummer und
den Differenzinformationsgehalt zwischen dem zu komprimierenden Header und dem Header in der durch den Vergleich erfassten lokalen Komprimierungstabelle zu übertragen, wenn der zu komprimierende Header nicht genau dem Header in der lokalen Komprimierungstabelle entspricht und der Differenzbetragswert kleiner als der obere Grenzdifferenzwert N ist.

9. Vorrichtung nach Anspruch 8, umfassend weiterhin Folgendes: eine Rückkopplungsantworteinheit, die dazu konfiguriert ist, ein Rückkopplungspaket von einem Datenpaketempfangsende zu empfangen, ein Rückkopplungskennzeichen an dem Datenpaketübertragungsende zu identifizieren, eine Kompressionsnummer der Rückkopplungsantwort zu analysieren und ein der Komprimierungsnummer entsprechendes Header-Feld in der lokalen Komprimierungstabelle zu entleeren.

10. Vorrichtung zum Dekomprimieren eines Ethernet-Headers, der sich an einem Datenpaketempfangsende befindet, umfassend eine Dekomprimierungseinheit und eine Übertragungseinheit, wobei
die Dekomprimierungseinheit dazu konfiguriert ist, einen zu dekomprimierenden Header zu und einen von einem Datenpaketübertragungsende empfangenen gemeinsamen Header zu identifizieren, Extrahieren eines Headers aus einer lokalen Dekomprimierungstabelle in Übereinstimmung einer Komprimierungsnummer, die dem zu dekomprimierenden Header entspricht, wobei der zu dekomprimierende Header ein komprimierter Header ist, der durch Komprimieren eines zu komprimierenden Headers an einem Datenpaketübertragungsende erhalten wird, und Vergleichen des zu dekomprimierenden Headers mit dem aus der lokalen Dekomprimierungstabelle extrahierten Header, um den ursprünglichen Headerinhalt wiederherzustellen;
die Übertragungseinheit dazu konfiguriert ist, für den zu dekomprimierenden Header den ursprünglichen Headerinhalt zu übertragen, der durch den Vergleich wiederhergestellt wird; und für den gemeinsamen Header den gemeinsamen Header direkt und transparent zu übertragen; wobei der zu dekomprimierende Header eine Komprimierungsnummer umfasst, wenn der zu komprimierende Header genau dem Header in der lokalen Komprimierungstabelle an dem Datenpaketübertragungsende entspricht; oder
der zu dekomprimierende Header eine Komprimierungsnummer und einen Differenzinformationsgehalt zwischen dem zu komprimierenden Header und dem Header in der lokalen Komprimierungstabelle an dem Datenpaketübertragungsende umfasst, wenn ein Differenzbetragswert zwischen dem zu komprimierenden Header und dem Header in der lokalen Komprimierungstabelle an dem Datenpaketübertragungsende kleiner als ein oberer Grenzdifferenzwert N ist und der zu komprimierende Header nicht genau dem Header in der lokalen Komprimierungstabelle entspricht.

11. Vorrichtung nach Anspruch 10, umfassend weiterhin eine Aktualisierungseinheit, die dazu konfiguriert ist, den ursprünglichen Headerinhalt in die lokale Dekomprimierungstabelle zu aktualisieren, um die lokale Dekomprimierungstabelle mit der vor dem Übertragen eines komprimierten Header an dem Datenpaketübertragungsende aktualisierten lokalen Komprimierungstabelle identisch zu halten.

12. Vorrichtung nach Anspruch 10 oder 11, umfassend weiterhin Folgendes:
eine Rückkopplungseinheit, die dazu konfiguriert ist, eine Headerüberprüfung an dem Datenpaketempfangssende nach dem Dekomprimieren durchzuführen, ein Rückkopplungspaket in Übereinstimmung mit einem Rückkopplungskennzeichen und der Komprimierungsnummer mit einer Reihenfolge zu erzeugen, wenn ein Ergebnis der Headerüberprüfung nicht mit einer Post-Dekompression Prüfsumme identisch ist, und das Rückkopplungspaket an das Datenpaketübertragungsende zu übertragen.

## Revendications

1. Un méthode de compression d'un en-tête Ethernet, comprenant: à une extrémité de transmission de paquets de données,
identifier (101) un en-tête qui doit être compressé et un en-tête commun;
pour l'en-tête identifié qui doit être compressé, comparer (102) l'en-tête qui doit être compressé avec un en-tête dans une table de compression locale, et générer un numéro de compression correspondant à l'en-tête qui doit être compressé pour la transmission; et
pour l'en-tête commun identifié, transmettre (102) directement et de manière transparente l'en-tête commun;
dans lequel la comparaison de l'en-tête qui doit être compressé avec un en-tête dans la table de compression locale, et la génération d'un nombre de compression correspondant à l'en-tête qui doit être compressé pour la transmission comprend:
lorsque la comparaison indique qu'une valeur de différence entre l'en-tête qui doit être compressé et l'en-tête dans la table de compression locale est inférieure à une valeur de différence limite supérieure N, transmettant uniquement le numéro de compression ou transmettant à la fois le numéro de compression et le contenu des informations de différence entre l'en-tête qui doit être compressé et l'en-tête dans la table de compression locale acquise par la comparaison;
comprenant en outre:
lorsque l'en-tête qui doit être compressé est exactement le même que l'en-tête dans la table de compression locale, ne transmettant que le numéro de compression; et
lorsque l'en-tête qui doit être compressé n'est pas exactement le même que l'en-tête dans la table de compression locale et que la valeur de la différence est inférieure à la valeur de différence limite supérieure N, la transmission du nombre de compression et du contenu des informations de différence entre l'en-tête qui a besoin à compresser et l'en-tête dans la table de compression locale acquis par la comparaison.

2. Le méthode selon la revendication 1, dans lequel le nombre de compression comprend au moins un identifiant de compression (ID) et une valeur de différence entre l'en-tête qui doit être compressé et l'en-tête dans la table de compression locale.

3. Le méthode selon la revendication 2, comprenant en outre:
lorsque la valeur de quantité de différence est supérieure à la valeur de différence limite supérieure N, régénérer l'ID, dans lequel un en-tête correspondant est dans un état mis à jour;
lorsque la valeur de quantité de différence est inférieure à la valeur de différence limite supérieure N, procéder sans recréer l'ID, dans lequel un en-tête correspondant est dans un état compressé.

4. Le méthode selon l'une quelconque des revendications 1 à 3, comprenant en outre la réalisation d'une réponse de rétroaction à la transmission;
dans lequel la réponse de rétroaction comprend: la réception d'un paquet de rétroaction d'une extrémité de réception de paquet de données, l'identification d'un identificateur de rétroaction à l'extrémité de transmission de paquet de données, l'analyse d'une valeur de compression de la réponse de rétroaction et la vidange d'un champ d'en-tête dans la table de compression locale correspondant à la numéro de compression.

5. Le méthode de décompression d'un en-tête Ethernet, comprenant: à une extrémité de réception de paquets de données,
identifier (201) un en-tête qui doit être décompressé et un en-tête commun, qui sont reçus d'une extrémité de transmission de paquets de données,
pour l'en-tête identifié qui doit être décompressé, extraire (201) un en-tête d'une table de décompression locale selon un numéro de compression correspondant à l'en-tête à décompresser, l'en-tête à décompresser étant un en-tête compressé obtenu par compression d'un en-tête qui a besoin à compresser à l'extrémité de transmission de paquets de données, et à comparer l'en-tête à décompresser avec l'en-tête extrait de la table de décompression locale pour restaurer le contenu de l'en-tête d'origine; et
pour l'en-tête commun identifié, transmettre (201) directement et de manière transparente l'en-tête commun;
dans lequel l'en-tête à décompresser comprend un numéro de compression lorsque l'en-tête qui doit être comprimé est exactement le même que l'en-tête dans la table locale de compression à la fin de la transmission de paquets de données; ou
l'en-tête à décompresser comprend un nombre de compression et un contenu d'informations de différence entre l'en-tête qui doit être compressé et l'en-tête dans la table de compression locale à la fin de la transmission du paquet de données lorsqu'une valeur de différence entre l'en-tête qui doit être compressé et le l'en-tête dans la table de compression locale à l'extrémité de transmission du paquet de données est plus petit qu'une valeur de différence limite supérieure N et l'en-tête qui doit être compressé n'est pas exactement le même que l'en-tête dans la table de compression locale.

6. Le méthode selon la revendication 5, comprenant en outre:
la mise à jour du contenu d'en-tête d'origine restauré vers la table de décompression locale, afin de garder la table de décompression locale cohérente avec la table de compression locale qui est mise à jour après la transmission d'un en-tête compressé à l'extrémité de transmission du paquet de données.

7. Le méthode selon la revendication 5 ou la revendication 6, comprenant en outre la réalisation d'un retour de vérification;
dans lequel la rétroaction de vérification comprend: l'exécution d'une vérification d'en-tête à l'extrémité de réception de paquets de données après la décompression; lorsqu'un résultat de la vérification d'en-tête n'est pas cohérent avec une somme de contrôle post-décompression, générer un paquet de rétroaction selon un identificateur de rétroaction et un ordre du numéro de compression avec une commande; et transmettre le paquet de rétroaction à l'extrémité de transmission du paquet de données.

8. Dispositif de compression d'un en-tête Ethernet, situé à une extrémité de transmission de paquets de données, comprenant une unité de compression et une unité de transmission, dans lequel
l'unité de compression est configurée pour identifier un en-tête qui doit être compressé et un en-tête commun, comparer l'en-tête qui doit être compressé avec un en-tête dans une table de compression locale et générer un numéro de compression correspondant à l'en-tête qui doit être compressé; et
l'unité de transmission est configurée pour: pour l'en-tête qui doit être compressé, transmettre le numéro de compression généré correspondant à l'en-tête qui doit être compressé; et pour l'en-tête commun, transmettre directement et de manière transparente l'en-tête commun;
dans lequel l'unité de compression est en outre configurée pour comprimer l'en-tête après avoir acquis une valeur de différence entre l'en-tête qui doit être compressé et l'en-tête dans la table de compression locale par la comparaison; et
dans lequel l'unité de transmission est en outre configurée pour: lorsque la comparaison indique que la valeur de différence entre l'en-tête qui doit être compressé et l'en-tête dans la table de compression locale est inférieure à une valeur de différence limite supérieure N, transmettre uniquement le nombre de compression ou transmettre à la fois le nombre de compression et le contenu d'informations de différence entre l'en-tête qui doit être compressé et l'en-tête dans la table de compression locale acquise par la comparaison;
l'unité de transmission est en outre configurée pour:
lorsque l'en-tête qui doit être compressé est exactement le même que l'en-tête dans la table de compression locale, transmettez uniquement le numéro de compression; et lorsque l'en-tête qui doit être compressé n'est pas exactement le même que l'en-tête dans la table de compression locale et que la valeur de différence est inférieure à la valeur de différence limite supérieure N, transmettre le nombre de compression et le contenu d'informations de différence entre l'en-tête qui doit être compressé et l'en-tête de la table de compression locale acquis via la comparaison.

9. Dispositif selon la revendication 8, comprenant en outre: une unité de réponse de rétroaction, configurée pour recevoir un paquet de rétroaction d'une extrémité de réception de paquet de données, identifier un identificateur de rétroaction à l'extrémité de transmission de paquet de données, analyser un numéro de compression de la réponse de rétroaction et vide un champ d'en-tête dans la table de compression locale correspondant au numéro de compression.

10. Dispositif de décompression d'un en-tête Ethernet, situé à une extrémité de réception de paquets de données, comprenant une unité de décompression et une unité de transmission, dans lequel
l'unité de décompression est configurée pour identifier un en-tête qui doit être décompressé et un en-tête commun, qui sont reçus d'une extrémité de transmission de paquets de données, extraire un en-tête d'une table de décompression locale selon un numéro de compression correspondant à l'en-tête qui doit être décompressé, l'en-tête à décompresser étant un en-tête compressé obtenu en compressant un en-tête qui doit être compressé à une extrémité de transmission de paquets de données, comparer l'en-tête qui doit être décompressé avec l'en-tête extrait de la table de décompression locale pour restaurer le contenu de l'en-tête d'origine;
l'unité de transmission est configurée pour: pour l'en-tête qui doit être décompressé, transmettre le contenu d'en-tête d'origine qui est restauré par la comparaison; et pour l'en-tête commun, transmettre directement et de manière transparente l'en-tête commun;
dans lequel l'en-tête à décompresser comprend un numéro de compression lorsque l'en-tête qui doit être comprimé est exactement le même que l'en-tête dans la table locale de compression à la fin de la transmission de paquets de données; ou
l'en-tête à décompresser comprend un nombre de compression et un contenu d'informations de différence entre l'en-tête qui doit être compressé et l'en-tête dans la table de compression locale à la fin de la transmission du paquet de données lorsqu'une valeur de différence entre l'en-tête qui doit être compressé et le l'en-tête dans la table de compression locale à l'extrémité de transmission du paquet de données est plus petit qu'une valeur de différence limite supérieure N et l'en-tête qui doit être compressé n'est pas exactement le même que l'en-tête dans la table de compression locale.

11. Dispositif selon la revendication 10, comprenant en outre une unité de mise à jour configurée pour mettre à jour le contenu d'en-tête d'origine restauré vers la table de décompression locale, de manière à maintenir la table de décompression locale cohérente avec la table de compression locale qui est mise à jour avant de transmettre un en-tête compressé au niveau des données fin de transmission de paquets.

12. Dispositif selon la revendication 10 ou la revendication 11, comprenant en outre:
une unité de rétroaction, configurée pour effectuer une vérification d'en-tête à l'extrémité de réception du paquet de données après la décompression, et lorsqu'un résultat de la vérification d'en-tête n'est pas cohérent avec une somme de contrôle post-décompression, générer un paquet de rétroaction selon un identificateur de rétroaction et la compression numéro avec une commande et transmettre le paquet de rétroaction à l'extrémité de transmission du paquet de données.
